(19) Europäisches Patentamt
European Patent Office
Office européen des brevets

(11) Veröffentlichungsnummer: **0 231 837 B1**

(12) # EUROPÄISCHE PATENTSCHRIFT

(45) Veröffentlichungstag der Patentschrift: **02.08.89**

(51) Int. Cl.[4]: **C09B 62/517**

(21) Anmeldenummer: **87100972.6**

(22) Anmeldetag: **23.01.87**

(54) **Verfahren zur Herstellung von wasserlöslichen Phthalocyaninfarbstoffen.**

(30) Priorität: **01.02.86 DE 3603124**

(43) Veröffentlichungstag der Anmeldung: **12.08.87 Patentblatt 87/33**

(45) Bekanntmachung des Hinweises auf die Patenterteilung: **02.08.89 Patentblatt 89/31**

(84) Benannte Vertragsstaaten: **BE CH DE FR GB IT LI**

(56) Entgegenhaltungen:
**EP-A- 0 043 561**
**EP-A- 0 075 905**
**GB-A- 2 024 837**

(73) Patentinhaber: **HOECHST AKTIENGESELLSCHAFT, Postfach 80 03 20, D-6230 Frankfurt am Main 80(DE)**

(72) Erfinder: **Springer, Hartmut, Dr., Am Erdbeerstein 27, D-6240 Königstein/Taunus(DE)**

**EP 0 231 837 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Aus der britischen Patentanmeldungs-Veröffentlichung Nr. 2 024 837A sind Verfahren zur Herstellung von wasserlöslichen Phthalocyaninfarbstoffen durch Umsetzung von Phthalocyaninsulfonsäurechloriden, die Sulfogruppen enthalten können, mit einem primären oder sekundären aromatischen Amin, wie einem Amin aus der Anilin- und Naphthylamin-Reihe, das eine oder mehrere β-substituierte Ethylsulfonyl-Gruppen oder eine oder mehrere Vinylsulfonyl-Gruppen enthält, und gegebenenfalls mit einem zweiten primären oder sekundären Amin der aliphatischen, heterocyclischen oder aromatischen Reihe bekannt, bei denen man zur Verfahrensverbesserung die Umsetzung in Gegenwart einer Pyridinsulfonsäure oder einer Pyridincarbonsäure anstelle von Pyridin selbst durchführt. Diese bekannten Verfahren sind insofern vorteilhaft, als mit ihnen auf das giftige und übelriechende Pyridin verzichtet und stattdessen beispielsweise die toxikologisch und ökologisch unbedenkliche Nicotinsäure verwendet werden kann.

Diese Verfahren der GB-A-2 024 837 weisen jedoch, wie sich inzwischen gezeigt hat, noch Mängel auf, die der technischen Ausübung gewisse Grenzen setzen. So ist es erfahrungsgemäß erforderlich, die Kondensationsreaktionen zwischen den Phthalocyaninsulfochloriden und den Aminen, verglichen mit dem durch Pyridin katalysierten Verfahren, bei höherer Temperatur durchzuführen, weil die Kondensation bei Raumtemperatur so langsam abläuft, daß sie als technisches Verfahren wegen ungenügender Raum/Zeit-Ausbeute unwirtschaftlich wird. Höhere Reaktionstemperaturen bewirken aber bei der Umsetzung in wäßrigem Medium, daß die konkurrierende Hydrolyse von Sulfochloridgruppen ebenfalls beschleunigt wird, weswegen Phthalocyanin-sulfonsäuren verstärkt gebildet werden und die Umsetzung zu einem Reaktivfarbstoffpro dukt mit nicht ausreichendem Fixiervermögen führt, somit nicht in optimaler Weise abläuft.

Um die Kondensationsreaktion ohne Temperaturerhöhung in befriedigender Weise durchzuführen, bestand daher der Bedarf an einem Katalysator, der bereits bei Raumtemperatur die Reaktion mit befriedigender Raum/Zeit-Ausbeute beschleunigt.

Es wurde nun gefunden, daß solche Katalysatoren überraschender Weise Pyridin-sulfonsäureamide und Pyridin-carbonsäureamide sind, da unter Anwendung dieser Verbindungen eine wesentlich wirtschaftlicher arbeitende Verfahrensweise zur Herstellung solcher Phthalocyaninfarbstoffe ermöglicht wird.

Die vorliegende Erfindung betrifft somit ein verbessertes Verfahren zur Herstellung von wasserlöslichen Phthalocyaninfarbstoffen durch Umsetzung von einem Phthalocyanin-sulfonsäurechlorid, das Sulfogruppen enthalten kann, oder einem Gemisch derselben mit einem primären oder sekundären Amin, vorzugsweise aromatischen Amin, insbesondere aus der Anilin- und Naphthylamin-Reihe, das eine oder mehrere, bevorzugt eine oder zwei, β-substituierte Ethylsulfonyl-Gruppen oder eine oder mehrere, bevorzugt eine oder zwei, Vinylsulfonyl-Gruppen enthält, und gegebenenfalls mit einem zweiten primären oder sekundären Amin der aliphatischen, heterocyclischen oder aromatischen Reihe, das dadurch gekennzeichnet ist, daß man die Umsetzung in Gegenwart eines Pyridin-sulfonsäureamids oder eines Pyridin-carbonsäureamids oder einer Mischung solcher Verbindungen vornimmt.

Phthalocyaninfarbstoffe, die nach diesem verbesserten Verfahren hergestellt werden können, sind beispielsweise aus den deutschen Patentschriften 1 179 317, 1 235 466, 1 289 218 und 1 283 997 und den US-Patentschriften 3 062 830 und 4 033 980 sowie aus der obengenannten GB-A-2 024 837 bekannt.

Die vorliegende Erfindung betrifft insbesondere ein verbessertes Verfahren zur Herstellung von faserreaktiven Phthalocyaninfarbstoffen in Gegenwart eines Pyridin-sulfonsäureamids oder eines Pyridin-carbonsäureamids oder einer Mischung solcher Verbindungen, bei welchem man Phthalocyaninsulfonsäurechloride, die Sulfogruppen enthalten können, mit einem primären oder sekundären Amin, vorzugsweise aromatischen Amin, insbesondere aus der Anilin- oder Naphthylamin-Reihe, das eine oder zwei, bevorzugt eine, β-Hydroxyethylsulfonyl-, β-Chlorethylsulfonyl-, β-Acetoxyethylsulfonyl-, β-Sulfatoethylsulfonyl-, β-Thiosulfatoethylsulfonyl- oder β-Phosphatoethylsulfonyl- oder Vinylsulfonyl-Gruppe(n) enthält, und gegebenenfalls mit einem zweiten primären oder sekundären Amin der aliphatischen, heterocyclischen oder aromatischen Reihe umsetzt.

Die im Amin enthaltene(n) β-substituierte(n) Ethylsulfonylgruppe(n) oder Vinylsulfonylgruppe(n) kann (können) direkt an den aromatisch carbocyclischen oder aromatisch heterocyclischen Kern des Amins gebunden sein oder über ein Brückenglied, wie beispielsweise eine Alkylengruppe von 1 bis 6 C-Atomen, vorzugsweise 2 bis 4 C-Atomen, oder eine Amidogruppe oder eine Alkylaminogruppe mit einem Alkylrest von 1 bis 4 C-Atomen, der substituiert sein kann, wie beispielsweise durch einen Phenylrest, eine Cyano-, Hydroxy- oder Alkoxygruppe von 1 bis 4 C-Atomen oder Alkanoyloxygruppe von 2 bis 5 C-Atomen.

Die Kondensationsreaktionen der Phthalocyaninsulfochloride mit den Aminen erfolgen bei einem pH-Wert von 3,5 bis 8,5, vorzugsweise 4 bis 8, insbesondere bevorzugt zwischen 5 und 7, unter Zusatz eines säurebindenden Mittels, wie einem Alkali-oder Erdalkalihydroxid oder einem alkalisch reagierenden Alkalimetall- oder Erdalkalimetallsalz von anorganischen oder organischen Säuren; bei Zusatz dieser säurebindenden Mittel ist darauf zu achten, daß sie so zugegeben werden, daß ein pH von 8,5, insbesondere 8, nicht überschritten wird.

Die erfindungsgemäßen Kondensationsreaktionen können bei einer Temperatur zwischen 0 und 60°C durchgeführt werden. Bevorzugt erfolgt die Umsetzung bei einer Temperatur zwischen 10 und 35°C.

Technisch vorteilhaft kann die erfindungsgemäße Umsetzung auch unterhalb 35°C durchgeführt werden, wie beispielsweise bei einer Temperatur zwischen 15 und 30°C.

Bevorzugt betrifft die Erfindung die Herstellung von Phthalocyaninfarbstoffen der nachstehend definierten allgemeinen Formel (1)

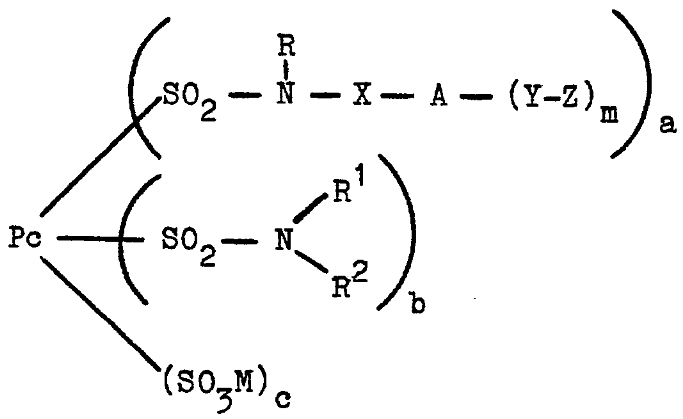

(1)

indem man ein Phthalocyaninsulfonsäurechlorid der nachstehend definierten allgemeinen Formel (2)

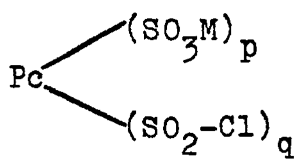

(2)

oder einer Mischung derselben in wäßrigem Medium gleich zeitig oder in beliebiger Reihenfolge mit einem Amin der nachstehend definierten allgemeinen Formel (3)

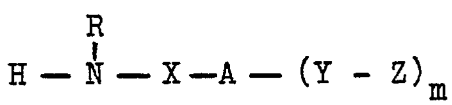

(3)

und gegebenenfalls mit einem weiteren Amin der nachstehend definierten allgemeinen Formel (4)

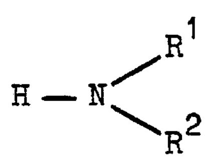

(4),

gegebenenfalls unter gleichzeitiger oder nachfolgender partieller Hydrolyse der Sulfochloridgruppen zu Sulfogruppen, umsetzt und die Kondensationsreaktionen der Phthalocyaninsulfochloride der allgemeinen Formel (2) mit den Aminen der allgemeinen Formel (3) und gegebenenfalls (4) erfindungsgemäß in Gegenwart eines Pyridin-sulfonsäureamids oder eines Pyridin-carbonsäureamids oder einer Mischung derselben durchführt.

In den obigen Formeln (1), (2), (3) und (4) haben die verschiedenen Formelreste die nachfolgenden Bedeutungen:

Pc ist der Rest des metallfreien oder eines metallhaltigen Phthalocyanins, wie beispielsweise des Kupfer-, Kobalt- oder Nickelphthalocyanins, wobei der Phthalocyaninrest noch in den 3- und/oder 4-Stellungen der carbocyclischen aromatischen Ringe des Phthalocyanins substituiert sein kann, wie beispielsweise durch Halogenatome, wie Chlor atome, oder Arylreste, wie Phenylreste, und in welchem die Sulfochlorid-, Sulfonamid- und/oder Sulfogruppen in den 3- und/oder 4-Stellungen der carbocyclischen aromatischen Ringe des Phthalocyanins gebunden sind;

R ist ein Wasserstoffatom oder ein niederer aliphatischer Rest, insbesondere eine niedere Alkylgruppe, der substituiert sein kann;

$R^1$ und $R^2$ bedeuten jedes ein Wasserstoffatom oder eine niedere Alkylgruppe, die substituiert sein kann, oder einen Arylrest, der substituiert sein kann, oder

$R^1$ und $R^2$ bilden gemeinsam mit dem Stickstoffatom und einem Alkylenrest von 3 bis 8 C-Atomen, bevorzugt 4 bis 6 C-Atomen, oder mit einem weiteren Heteroatom, wie einem Stickstoffatom oder einem Sauerstoffatom, und zwei niederen Alkylenresten den Rest eines 4- bis 8-gliedrigen heteroyclischen Rings, wie beispielsweise den Piperidino-, Piperazino- oder Morpholino-Rest;
A ist ein aromatischer carbocyclischer oder aromatischer heterocyclischer Rest, bevorzugt ein gegebenenfalls substituierter Phenylen- oder Naphthylenrest, insbesondere einen Phenylen- oder Naphthylenrest, die beide durch 1 bis 4 Substituenten aus der Gruppe niederes Alkyl, wie Methyl und Ethyl, niederes Alkoxy, wie Methoxy und Ethoxy, Halogen, wie Chlor und Brom, Carboxy, Nitro und Sulfo substituiert sein können;
X ist eine direkte Bindung oder ein zweiwertiges organisches Bindeglied, wie beispielsweise ein Alkylenrest von 1 bis 6 C-Atomen oder eine Alkylenaminogruppe mit einem Alkylrest von 1 bis 6 C-Atomen, wobei deren Aminogruppe noch durch einen gegebenenfalls substituierten Alkylrest substituiert sien kann, oder beispielsweise ein Rest der Formel

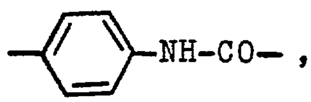 , 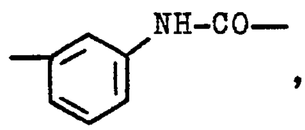 , 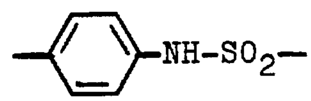 ,

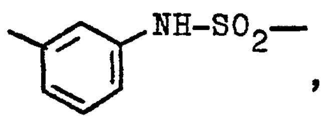 , 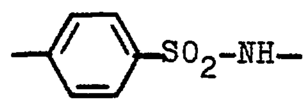 , 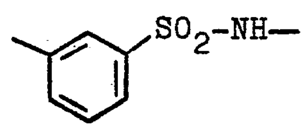 ,

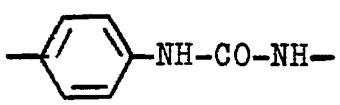 , 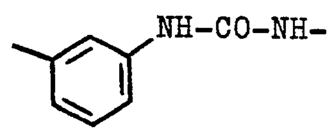 oder 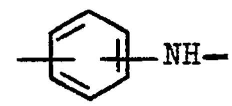

hiervon bevorzugt ein Rest der Formel 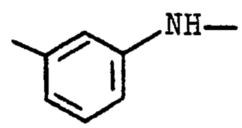 ,

$-(CH_2)_k-$ oder $-(CH_2)_n-N(R^*)-$ ,

in welchen
k eine ganze Zahl von 1 bis 5,
n eine ganze Zahl von 2 bis 6 und
R* ein Wasserstoffatom oder eine Alkylgruppe von 1 bis 5 C-Atomen bedeutet,
oder
X bildet zusammen mit der Gruppe -N(R)- einen Rest der allgemeinen Formel (5)

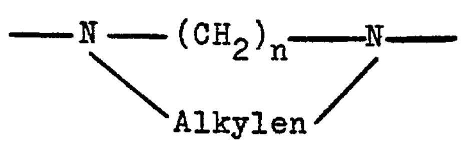 (5)

in welchem
n die obengenannte Bedeutung hat und
Alkylen einen niederen Alkylenrest darstellt;
Y ist eine direkte Bindung oder eine Gruppe der Formel

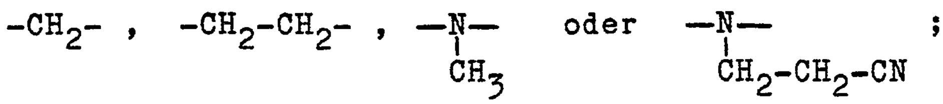

oder

Z ist die β-Hydroxyethylsulfonyl-, β-Chlorethylsulfonyl-, β-Acetoxyethylsulfonyl-, β-Thiosulfatoethylsulfonyl-, β-Phosphatoethylsulfonyl- oder die Vinylsulfonyl-Gruppe, bevorzugt die β-Sulfatoethylsulfonyl-Gruppe;
a ist eine ganze Zahl von 1 bis 4;
b ist eine ganze Zahl von Null bis 3;
c ist eine ganze Zahl von Null bis 3, wobei a, b und c gleich oder verschieden voneinander sein können, jedoch die Summe von (a+b+c) höchstens 4 ist;
p ist eine ganze Zahl von Null bis 3;
q ist eine ganze Zahl von 1 bis 4, wobei p und q gleich oder verschieden voneinander sein können, jedoch die Summe von (p+q) höchstens 4 ist;
m ist die Zahl 1 oder 2;
M ist ein Wasserstoffatom oder ein Alkalimetall, wie Natrium, Kalium oder Lithium.

Die Formelglieder können zueinander gleiche und voneinander verschiedene Bedeutungen besitzen.

Eine Sulfogruppe ist eine Gruppe der allgemeinen Formel $-SO_3M$ mit M der obengenannten Bedeutung; in gleicher Weise ist eine Carboxygruppe eine Gruppe der allgemeinen Formel $-COOM$ , eine Sulfatogruppe, eine Gruppe der allgemeinen Formel $-OSO_3M$ , eine Thiosulfatogruppe eine Gruppe der allgemeinen Formel $-S-SO_3M$ und eine Phosphatogruppe eine Gruppe der allgemeinen Formel $-OPO_3M_2$ , jeweils mit M der obengenannten Bedeutung.

Bevorzugt betrifft die Erfindung insbesondere die Herstellung von Phthalocyaninfarbstoffen der allgemeinen Formel (1), in welcher der Formelindex b die Zahl Null bedeutet, Y eine direkte Bindung ist, der Formelindex m für die Zahl 1 steht, Z die β-Sulfatoethylsulfonyl-Gruppe bedeutet und Pc, R, A, M sowie a und c die obengenannten Bedeutungen haben, wobei die Summe von (a + c) gleich einer Zahl von 2 bis 4 ist, durch Umsetzung eines Phthalocyaninsulfonsäurechlorids der allgemeinen Formel (2) oder einer Mischung derselben mit einem Amin der allgemeinen Formel (3), in welcher R, X und A die obengenannten Bedeutungen haben, Y eine direkte Bindung bedeutet, m für die Zahl 1 steht und Z die β-Sulfatoethylsulfonyl-Gruppe darstellt, unter den erfindungsgemäßen Verfahrensbedingungen. Insbesondere hiervon ist bevorzugt die erfindungsgemäße Herstellung von Phthalocyaninfarbstoffen entsprechend der allgemeinen Formel (1a)

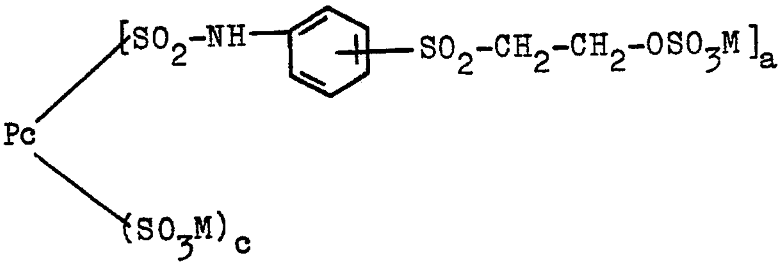

(1a)

in welcher Pc sowie a und c die obengenannten Bedeutungen haben, wobei die Summe von (a + c) eine Zahl von 2 bis 4 ist.

Die erfindungsgemäß herstellbaren faserreaktiven Phthalocyaninfarbstoffe werden in der Regel in Form ihrer Salze, wie der Alkalimetallsalze, erhalten und finden als solche ihre Verwendung zum Färben von Fasermaterialien. Desgleichen werden die Verbindungen der allgemeinen Formel (3) bevorzugt in Form ihrer Salze, wie Alkalimetallsalze, in die erfindungsgemäße Kondensationsreaktion eingesetzt.

Die erfindungsgemäß herstellbaren faserreaktiven Phthalocyaninfarbstoffe, wie beispielsweise die Farbstoffe der allgemeinen Formel (1), werden in der Regel in Form von Gemischen der Einzelverbindungen, wie beispielsweise der Einzelverbindungen der allgemeinen Formel (1), erhalten, wobei sich diese Einzelverbindungen voneinander durch den Substitutionsgrad der Sulfogruppen und Sulfonamidgruppen an den Phthalocyaninrest unterscheiden, - am Beispiel der allgemeinen Formel (1) durch den Substitutionsgrad der mit den Indizes a, b und c bezeichneten Reste. Am Beispiel der allgemeinen Formel (1) sind deshalb bei der Bezeichnung der Formel des erhaltenen Verfahrensproduktes (faserreaktiven Phthalocyaninfarbstoffes) die Indices a, b und c in der Regel gebrochene Zahlen.

Die im vorhergehenden und im nachfolgenden benutzte Angabe "niedere" bedeutet, daß die damit bezeichneten Gruppen Alkylreste oder Alkylenreste von 1 bis 4 C-Atomen enthalten bzw. sind. Die aliphatischen Reste und die Arylreste der Formelglieder R, $R^1$ und $R^2$ können, wie angegeben, Substituenten enthalten. Bei den Alkylresten, bevorzugt niedere Alkylgruppen, sind die Substituenten bevorzugt Hydroxy, Sulfo, Carboxy und Phenyl, wobei diese Alkylreste, falls substituiert, bevorzugt 1 oder 2 solche Substituenten enthalten. Arylreste sind bevorzugt gegebenenfalls substituierte Phenylreste; die Arylreste können vorzugsweise durch 1 oder 2 Substituenten aus der Gruppe Methyl, Chlor, Carboxy und Sulfo substituiert sein.

Die erfindungsgemäß bei den Kondensationsreaktionen verwendeten Pyridinsulfonsäureamide oder Pyridincarbonsäureamide sind insbesondere abgeleitet von Pyridin-mono-, -di- und -trisulfonsäure, Pyridin-mono-, -di- und -tri-carbonsäuren, weiterhin von deren im Heterocyclus durch nichtionogene Substituenten substituierte Derivaten, wie beispielsweise methyl- und ethylsubstituierte Pyridinsulfonsäuren oder -carbonsäuren. Solche erfindungsgemäß verwendeten Pyridin-verbindungen sind beispielsweise das Pyridin-2-sulfonsäureamid, Pyridin-3-sulfonsäureamid, Pyridin-4-sulfonsäureamid, Pyridin-2-carbonsäureamid, Pyridin-3-carbonsäureamid, Pyridin-4-carbonsäureamid, Pyridin-2,3-dicarbonsäureamid, Pyridin-2,4-dicarbonsäureamid, Pyridin-2,5-dicarbonsäureamid, Pyridin-2,6-dicarbonsäureamid, Pyridin-3,4-dicarbonsäureamid, Pyridin-3,5-dicarbonsäureamid, Pyridin-2,3,4-tricarbonsäureamid, Pyridin-2,4,5-tricarbonsäureamid, 2-Methyl-pyridin-3-sulfonsäureamid, 4-Methyl-pyridin-3-carbonsäureamid, 4-Ethyl-pyridin-3-carbonsäureamid, 6-Methyl-pyridin-3-carbonsäureamid, 4,6-Dimethyl-pyridin-2-carbonsäureamid, 2,6-Dimethyl-pyridin-3-carbonsäureamid und 2-Methyl-pyridin-3,4-dicarbonsäureamid. Besonders bevorzugt und vorteilhaft ist die Verwendung von Pyridin-3-carbonsäureamid (Nicotinsäureamid), das praktisch untoxisch und geruchlos ist und sich für den hier angegebenen Zweck als hervorragend geeignet erwiesen hat.

Das erfindungsgemäße Verfahren kann in der Weise modifiziert werden, daß vor, während oder nach der (den) eigentlichen Kondensationsreaktion(en) ein Teil der Sulfonsäurechloridgruppen der Phthalocyanin-Ausgangsverbindung, wie der Formel (2), durch Hydrolyse in Sulfogruppen überführt wird; so kann die Kondensation beispielsweise so durchgeführt werden, daß gleichzeitig mit der Umsetzung der Amine, wie des Amins (3) oder der Amine (3) und (4), ein Teil der Sulfonsäurechloridgruppen hydrolysiert wird, oder es kann so verfahren werden, daß zunächst mit einer zur vollständigen Umsetzung aller Sulfonsäurechloridgruppen nicht ausreichenden Menge an dem Amin, wie dem Amin der Formel (3) oder der Amine der Formel (3) und (4), umgesetzt wird und daß anschließend die restlichen Sulfonsäurechloridgruppen durch einen besonderen Reaktionsschritt in saurem bis schwach alkalischem Milieu, so bei einem pH-Wert zwischen 1 und 8, gegebenenfalls in der Wärme, so bei einer Temperatur zwischen 20 und 60°C, hydrolysiert werden.

Phthalocyanin-Ausgangsverbindungen sind beispielsweise Sulfonsäurechloride oder sulfogruppenhaltige Sulfonsäurechloride des metallfreien Phthalocyanins, vorzugsweise jedoch solche von metallhaltigen Phthalocyaninen, wie beispielsweise Di-, Tri- oder Tetrasulfonsäurechloride des Kupferphthalocyanins, des Kobaltphthalocyanins oder Nickelphthalocyanins, so beispielsweise Kupferphthalocyanin-(3)-disulfonsäurechlorid, Kupferphthalocyanin-(3)-trisulfonsäurechlorid, Kupfer- oder Nickelphthalocyanin-(3)-tetrasulfonsäurechlorid, Kobaltphthalocyanin-(3)-trisulfonsäurechlorid, Kupferphthalocyanin-(4)-disulfonsäurechlorid oder Kupferphthalocyanin-(4)-tetrasulfonsäurechlorid, Kupferphthalocyanin-(3)-disulfonsäurechlorid-disulfonsäure, Kupferphthalocyanin-(3)-trisulfonsäurechlorid-monosulfonsäure, weiterhin analoge Sulfonsäurechloride, die am Phthalocyaninkern zusätzlich andere Substituenten, wie Phenylreste und Halogenatome, enthalten, so beispielsweise Sulfonsäurechloride von Tetraphenylkupferphthalocyanin oder Tetrachlor-nickelphthalocyanin. Solche Sulfonsäurechloride, wie beispielsweise entsprechend der allgemeinen Formel (2), werden nach bekannten Verfahren hergestellt, beispielsweise nach dem Verfahren der deutschen Patentschrift 891 121.

Amine mit β-substituierten Ethylsulfonyl-Gruppen oder Vinylsulfonylgruppen, wie solche der allgemeinen Formel (3), sind beispielsweise β-Hydroxyethyl-(4-amino-phenyl)-sulfon, β-Hydroxyethyl-(3-amino-phenyl)-sulfon, β-Hydroxyethyl-(3-amino-4-methoxy-phenyl)-sulfon, β-Hydroxyethyl-[4-(N-methyl-amino)-phenyl]-sulfon, β-Hydroxyethyl-(3-methoxy-4-amino-phenyl)-sulfon, β-Hydroxyethyl-(3-amino-4-methyl-phenyl)-sulfon, β-Hydroxyethyl- (3-amino-4-sulfo-phenyl)-sulfon, β-Hydroxyethyl-(3-brom-4-amino-phenyl)-sulfon, β-Hydroxyethyl-(3-amino-4-carboxy-phenyl)-sulfon, β-Hydroxyethyl-(3-amino-4-hydroxy-phenyl)-sulfon, β-Hydroxyethyl-(3-hydroxy-4-amino-phenyl)-sulfon, β-Hydroxyethyl-(2,5-dimethoxy-4-amino-phenyl)-sulfon, β-Hydroxyethyl-(2-methyl-4-amino-5-methoxy-phenyl)-sulfon, β-Hydroxyethyl-[4-amino-naphthyl-(1)]-sulfon, β-Hydroxyethyl-[5-amino-naphthyl-(1)]-sulfon, β-Hydroxyethyl-[6-amino-naphthyl-(2)]-sulfon, β-Hydroxyethyl-[6-amino-5-sulfonaphthyl-(2)]-sulfon, 2-Amino-6,8-bis-(β-hydroxyethylsulfonyl)-naphthalin, β-Hydroxyethyl-(3-amino-4-methoxy-benzyl)-sulfon, β-Hydroxyethyl-[β-(4-aminophenyl)-ethyl]-sulfon, β-Hydroxyethyl-[7-amino-naphthyl-(1)]-sulfon, β-Hydroxyethyl- [7-amino-3-sulfonaphthyl-(1)]-sulfon, β-Hydroxyethyl-[3-nitro-4-(4′-aminophenylamino)-phenyl]-sulfon, β-Hydroxyethyl-[3-(4′-aminobenzoylamino)-4-hydroxyphenyl]-sulfon, β-Hydroxyethyl-[3-(4-aminobenzoylamino)-phenyl]-sulfon, β-Hydroxyethyl-(3-amino-4-hydroxy-5-nitrophenyl)-sulfon, β-Hydroxyethyl-[4-(3′-aminophenylsulfonylamino)-phenyl]-sulfon, β-Hydroxyethyl- [4-(β-aminoethyl)-phenyl]-sulfon, β-Hydroxyethyl-[4-(N-piperazino)-phenyl]-sulfon, β-Hydroxyethyl-[4-(β-aminoethyl-amino)-3-nitro-phenyl]-sulfon, β-Hydroxyethyl-[4-(3′-amino-4′-sulfo-phenylaminocarbonyl)-phenyl]-sulfon, β-Hydroxyethyl-[4-(4′-amino-3′-sulfo-phenylaminocarbonyl)-phenyl]-sulfon, β-Hydroxyethyl-[4-(3′-amino-4′-sulfo-phenylaminosulfonyl)-phenyl]-sulfon, β-Hydroxyethyl-[4-(3′-amino-4′-sulfo-ureido)-phenyl]-sulfon, 3-[N-(β-Hydroxyethyl-sulfonyl)-N-(β-cyanoethyl)]-amino-anilin, 3-[N-(β-Hydroxyethylsulfonyl)-methyl]-6-methoxy-anilin, 4-[N-(β-Hydroxyethylsulfonyl)-N-methyl]-amino-anilin und 3-β-(β′-Hydroxyethylsulfonyl)-ethyl-anilin sowie deren entsprechenden Derivate, in denen die β-Hydroxyethyl-Gruppe durch eine Vinylgruppe ersetzt ist oder in denen die Hydroxygruppe

des β-Hydroxyethyl-Restes durch einen anderen Substituenten, vorzugsweise durch einen Substituenten, der unter alkalischen Bedingungen abspaltbar ist, ersetzt ist, wie bei spielsweise durch die Sulfato-, Phosphato-, Thiosulfato- oder Acetoxygruppe oder das Chloratom.

Die anderen Ausgangsamine, die in das erfindungsgemäße Verfahren eingesetzt werden können, wie die Amine der allgemeinen Formel (4), sind beispielsweise Ammoniak, Methylamin, Ethylamin, n-Butylamin, Benzylamin, Anilin, Ethanolamin, Dimethylamin, Diethylamin, Di-isopropylamin, N-Methylbenzylamin, N-Methylanilin, Piperidin, Morpholin, Diäthanolamin, 2-Aminoethan-1-sulfonsäure, 2-Aminoethan-1-carbonsäure, 4-Aminobenzolcarbonsäure, 3-Aminobenzolsulfonsäure oder 4-Aminobenzolsulfonsäure.

Säurebindende Mittel, die in dem erfindungsgemäßen Verfahren verwendet werden, sind bspw. Hydroxide, Carbonate oder Hydrogencarbonate, sekundäre und tertiäre Phosphate, Borate und Acetate der Metalle der ersten bis dritten Gruppe des Periodensystems, vorzugsweise die Natrium- und Kaliumverbindungen und auch Calciumverbindungen.

Das erfindungsgemäße Verfahren wird bevorzugt in wäßrigem Medium durchgeführt. Zur Verbesserung der Löslichkeit der Ausgangs- bzw. Endprodukte im wäßrigen Reaktionsmedium kann man gegebenenfalls organische Lösungsmittel, vorzugsweise Amide aliphatischer Carbonsäuren, wie Dimethylformamid oder N-Methyl-pyrrolidon, zusetzen.

Die nach beendeter Kondensationsreaktion erhaltene Farbstofflösung kann - nach entsprechender Standardisierung und gegebenenfalls weiterer Zugabe von Puffersubstanzen - ohne weitere Isolierung des entstandenen Farbstoffs direkt als Flüssigeinstellung zum Färben oder Bedrucken von Fasermaterialien eingesetzt werden. Wünscht man jedoch den entstandenen Farbstoff in Pulverform zu erhalten, so kann die Isolierung der nach dem vorstehend beschriebenen Verfahren erhaltenen Phthalocyaninfarbstoffe in üblicher Weise durch Aussalzen, beispielsweise mit Natrium- oder Kaliumchlorid erfolgen, und/oder durch Ansäuern mit einer Mineralsäure oder durch Eindampfen der neutralen oder schwach sauren wäßrigen Farbstofflösungen, vorzugsweise bei mäßig erhöhter Temperatur und vermindertem Druck.

Die nach dem erfindungsgemäßen Verfahren erhältlichen Phthalocyaninfarbstoffe eignen sich zum Färben und Bedrukken von Fasermaterialien aus Wolle, Seide, linearen Polyamiden, insbesondere jedoch von hydroxygruppenhaltigen Materialien, wie Cellulose, beispielsweise Leinen, Regeneratcellulose und vor allem Baumwolle, ferner von Leder, und liefern sehr wertvolle, kräftige Färbungen und Drucke, die sich durch sehr gute Naßechtheiten und sehr gute Lichtechtheiten auszeichnen.

Die Herstellung der Färbungen erfolgt in üblicher Weise, wie beispielsweise in der GB-A-2 024 837 erwähnt.

Die nachstehenden Beispiele dienen zur Erläuterung der Erfindung. Die Teile sind Gewichtsteile, die Angaben in Prozent sind Gewichtsprozent, sofern nichts anderes vermerkt. Gewichtsteile verhalten sich zu Volumenteilen wie das Kilogramm zum Liter. Die formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Beispiel 1

112 Teile β-Sulfatoethyl-(4-amino-phenyl)-sulfon werden in 165 Teilen Wasser unter Zugabe von Natriumhydrogencarbonat bei einem pH-Wert von 6,5 gelöst. Unter gutem Rühren werden 97 Teile Kupferphthalocyanin-(3)-tetrasulfochlorid in Form eines feuchten Filterkuchens eingetragen. Dann fügt man 6,1 Teile Nicotinsäureamid hinzu. Die Reaktion setzt jetzt langsam ein, und man hält in der Folge bei einer Temperatur von 20 bis 25°C den pH-Wert 6 bis 6,5 durch Zugabe von Natriumhydrogencarbonat. Nach ca. 7 Stunden ist die Reaktion beendet, es wird kein Bicarbonat mehr aufgenommen, und es ist eine klare, blaue Lösung entstanden.

Die Isolierung des gebildeten Farbstoffs erfolgt durch Eindampfen dieser Lösung oder durch Aussalzen. Man erhält einen salzhaltigen, türkisblauen Farbstoff, dessen Konstitution nach der Analyse etwa der Formel

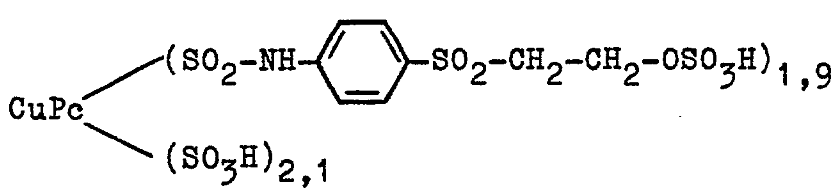

entspricht. Der Farbstoff ergibt auf Baumwollgewebe in Gegenwart alkalisch wirkender Mittel leuchtend türkisblaue Färbungen.

Beispiel 1a (Vergleichsbeispiel)

Man wiederholt das Verfahren des Beispiels 1 mit dem Unterschied, daß anstelle von 6,1 Teilen Nicotinsäureamid 6,1 Teile Nicotinsäure (in Form des Natriumsalzes) als Katalysator eingesetzt werden. Die Reaktion läuft bei 20 bis 25°C wesentlich langsamer ab als im Beispiel 1 und ist erst nach ca. 22 Stunden beendet.

Der entstehende Farbstoff besitzt praktisch die gleiche Zusammensetzung und die gleichen anwendungstechnischen Eigenschaften wie das in Beispiel 1 hergestellte Produkt.

Beispiel 2

42,1 Teile β-Sulfatoethyl-(3-amino-phenyl)-sulfon und 6,1 Teile Nicotinsäureamid werden in 750 Teilen Wasser unter Zugabe von Natriumbicarbonat bei einem pH-Wert von 6,5 bei Raumtempeatur gelöst. Unter gutem Rühren werden 97 Teile Kupferphthalocyanin-(3)-tetrasulfochlorid in Form eines feuchten Filterkuchens eingetragen. Die Reaktion setzt langsam ein und der pH-Wert des Reaktionsgemisches wird durch Einstreuen von Natriumbicarbonat bei 6,0 bis 6,5 und die Temperatur bei 20 bis 25°C gehalten. Nach etwa 23 Stunden ist die Reaktion beendet. Die entstandene Farbstofflösung wird filtriert und sodann unter vermindertem Druck bei 60°C zur Trockene eingedampft. Man erhält einen salzhaltigen, türkisblauen Farbstoff, dessen Konstitution nach der Analyse etwa der Formel

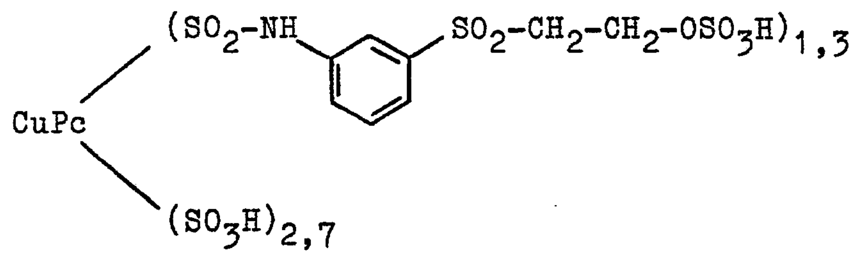

entspricht. Der Farbstoff ergibt auf Baumwollgewebe in Gegenwart alkalisch wirkender Mittel leuchtend türkisblaue Färbungen; er entspricht in seinen Eigenschaften dem in der deutschen Patentschrift 1 179 317, Beispiel 1, beschriebenen Farbstoff.

Beispiel 2a (Vergleichsbeispiel)

Man wiederholt das Verfahren des Beispiels 2 mit dem Unterschied, daß anstelle von 6,1 Teilen Nicotinsäureamid 6,1 Teile Nicotinsäure (in Form des Natriumsalzes) als Katalysator eingesetzt werden. Die Reaktion läuft bei Raumtemperatur wesentlich langsamer ab als im Beispiel 2 und ist erst nach ca. 120 Stunden beendet.

Der erhaltene Farbstoff besitzt die gleiche analytische Zusammensetzung und die gleichen anwendungstechnischen Eigenschaften wie das in Beispiel 2 hergestellte Produkt.

Beispiel 3

In eine neutrale Lösung von 84,3 Teilen β-Sulfatoethyl-(4-amino-phenyl)-sulfon in 400 Teilen Wasser trägt man bei Raumtemperatur unter gutem Rühren 97 Teile Nickelphthalocyanin-(3)-tetrasulfochlorid in Form eines feuchten Filterkuchens ein. Man fügt dann 6,1 Teile Nicotinsäureamid hinzu und hält während der nur langsam einsetzenden Reaktion die Temperatur bei 20 bis 25°C und den pH-Wert bei 6 bis 6,5 durch fortlaufende Zugabe von Natriumhydrogencarbonat. Nach ca. 21 Stunden ist die Reaktion beendet, und es wird kein Bicarbonat mehr verbraucht. Zur Isolierung des gebildeten Farbstoffs wird die erhaltene klare Lösung unter vermindertem Druck eingedampft. Der Farbstoff fällt in Form eines grünblauen salzhaltigen Pulvers an. Er ist in Wasser leicht löslich und fixiert auf nativen und regenerierten Cellulosefasern mit Alkalien wasch- und lichtecht. Er entspricht in seinen Eigenschaften dem aus der Deutschen Patentschrift 1 179 317, Beispiel 6, bekannten Farbstoff und besitzt gemäß Analyse die folgende Konstitution:

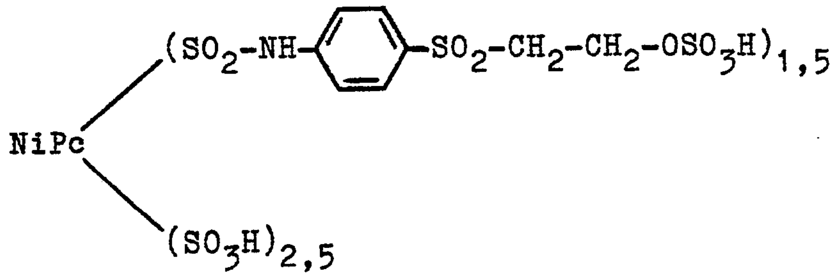

Beispiel 3a (Vergleichsbeispiel)

Man wiederholt das Verfahren des Beispiels 3, jedoch wird anstelle von Nicotinsäureamid die gleiche Gewichtsmenge Nicotinsäure (in Form des Natriumsalzes) als Katalysator eingesezt. Die Reaktion läuft bei Raumtemperatur wesent lich langsamer ab als im Beispiel 3 und ist erst nach ca. 80 Stunden beendet.

Der erhaltene Farbstoff besitzt praktisch die gleiche Zusammensetzung und die gleichen anwendungstechnischen Eigenshaften wie das in Beispiel 3 hergestellte Produkt.

**Patentansprüche**

1. Verfahren zur Herstellung von wasserlöslichen Phthalocyaninfarbstoffen, die eine oder mehrere β-substituierte Ethylsulfonyl-Gruppen oder eine oder mehrere Vinylsulfonyl-Gruppen enthalten, durch Umsetzung von einem Phthalocyanin-sulfonsäurechlorid, das Sulfogruppen enthalten kann, oder einem Gemisch derselben mit einem primären oder sekundären Amin, das eine oder mehrere β-substituierte Ethylsulfonyl-Gruppen oder eine oder mehrere Vinylsulfonyl-Gruppen enthält, und gegebenenfalls mit einem zweiten primären oder sekundären Amin der aliphatischen, heterocyclischen oder aromatischen Reihe, dadurch gekennzeichnet, daß man die Umsetzung in Gegenwart eines Pyridin-sulfonsäureamids oder eines Pyridin-carbonsäureamids oder einer Mischung solcher Verbindungen durchführt.

2. Verfahren nach Anspruch 1, dadurch gekennzeichnet, daß das Pyridin-carbonsäureamid ein Pyridin-monocarbonsäureamid ist.

3. Verfahren nach Anspruch 1, dadurch gekennzeichnet, daß das Pyridin-carbonsäureamid das Nicotinsäureamid ist.

4. Verfahren nach Anspruch 1, 2 oder 3, dadurch gekennzeichnet, daß man die Umsetzung bei einer Temperatur zwischen 15 und 30°C durchführt.

5. Verfahren nach mindestens einem der Ansprüche 1 bis 4, dadurch gekennzeichnet, daß gleichzeitig mit den Kondensationsreaktionen oder anschließend Sulfochloridgruppen in Sulfogruppen übergeführt werden.

6. Verfahren nach mindestens einem der Ansprüche 1 bis 5, bei welchem in dem Ausgangs- und Endverbindungen die β-substituierte Ethylsulfonyl-Gruppe eine β-Hydroxyethylsulfonyl-, β-Chlorethylsulfonyl-, β-Acetoxyethylsulfonyl-, β-Sulfatoethylsulfonyl-, β-Thiosulfatoethylsulfonyl- oder β-Phosphatoethylsulfonyl-Gruppe ist.

7. Verfahren nach mindestens einem der Ansprüche 1 bis 5, dadurch gekennzeichnet, daß der hergestellte Phthalocyaninfarbstoff eine Verbindung der allgemeinen Formel (1)

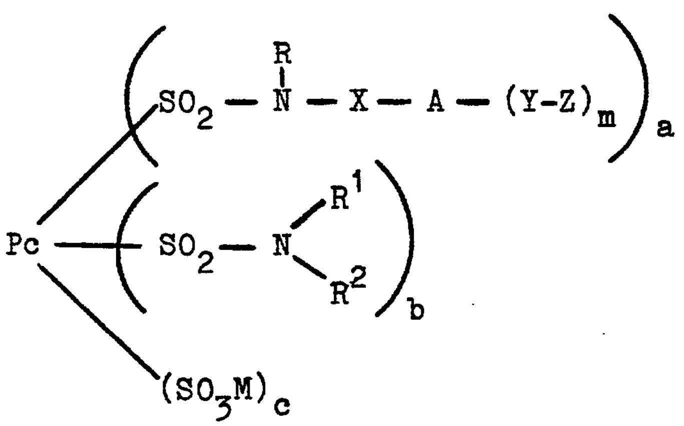

(1)

ist, in welcher

Pc der Rest des metallfreien oder eines metallhaltigen Phthalocyanins, das noch in den 3- und/oder 4-Stellungen der carbocyclischen aromatischen Ringe substituiert sein kann, und in welchem die Sulfochlorid-, Sulfonamid- und/oder Sulfogruppen in den 3- und/oder 4-Stellungen der carbocyclischen aromatischen Ringe gebunden sind, ist,
R ein Wasserstoffatom oder ein aliphatischer Rest, der substituiert sein kann, ist,
$R^1$ und $R^2$ jedes ein Wasserstoffatom oder eine $C_1$–$C_4$ Alkylgruppe, die substituiert sein kann, oder einen Arylrest, der substituiert sein kann, bedeutet oder
$R^1$ und $R^2$ gemeinsam mit dem Stickstoffatom und einem Alkylenrest von 3 bis 8 C-Atomen oder mit einem weiteren Heteroatom und zwei niederen Alkylenresten den Rest eines 4- bis 8-gliedrigen heterocyclischen Rings bilden,
A ein aromatischer carbocyclischer oder aromatischer heterocyclischer Rest ist,
X eine direkte Bindung oder ein zweiwertiges organisches Bindeglied ist oder zusammen mit der Gruppe -N(R)- einen Rest der allgemeinen Formel

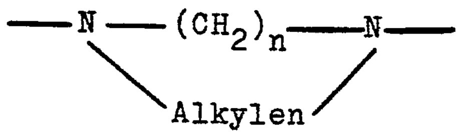

(5)

bildet, in welcher
n eine ganze Zahl von 2 bis 6 ist und
Alkylen einen niederen Alkylenrest darstellt,
Y für eine direkte Bindung oder eine Gruppe der Formel

$-CH_2-$ , $-CH_2-CH_2-$ , 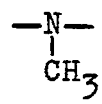 oder 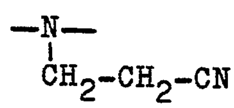 ;

steht,
Z die β-Hydroxyethylsulfonyl-, β-Chlorethylsulfonyl-, β-Acetoxyethylsulfonyl-, β-Thiosulfatoethylsulfonyl-, β-Phosphatoethylsulfonyl-, Vinylsulfonyl- oder β-Sulfatoethylsulfonyl-Gruppe ist,
a eine ganze Zahl von 1 bis 4 ist,
b eine ganze Zahl von Null bis 3 ist und
c eine ganze Zahl von Null bis 3 ist
wobei a, b und c gleich oder verschieden voneinander sein können, jedoch die Summe von (a+b+c) höchstens 4 ist,
m die Zahl 1 oder 2 ist und
M ein Wasserstoffatom oder ein Alkalimetall bedeutet, und daß man die Umsetzung mit einem Phthalocyaninsulfochlorid der allgemeinen Formel (2)

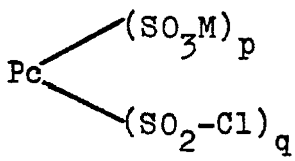

(2)

worin p eine ganze Zahl von Null bis 3 ist und
q eine ganze Zahl von 1 bis 4 ist,
wobei p und q gleich oder verschieden voneinander sein können, jedoch die Summe von (p+q) höchstens 4 ist und
in welcher Pc und M die obengenannten Bedeutungen haben, oder einem Gemisch derselben in wäßrigem Medium mit einem Amin der allgemeinen Formel (3)

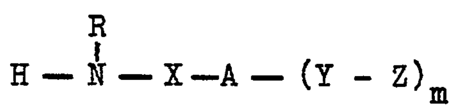

(3)

in welcher A, R, X, Y, Z und m die obengenannten Bedeutungen haben, und gegebenenfalls mit einem Amin der allgemeinen Formel (4)

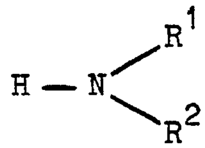

(4),

in welcher $R^1$ und $R^2$ die obengenannten Bedeutungen haben, durchführt.

**Revendications**

1. Procédé pour préparer des colorants phtalocyaniques solubles dans l'eau qui contiennent un ou plusieurs radicaux éthylsulfonyles substitués en β ou un ou plusieurs radicaux vinylsulfonyles, par réaction d'un phtalocyanine-sulfochlorure contenant des radicaux sulfo, ou d'un mélange de tels sulfochlorures, avec une amine primaire ou secondaire qui contient un ou plusieurs radicaux éthylsulfonyles substitués en β ou un ou plusieurs radicaux vinylsulfonyles, et éventuellement avec une deuxième amine primaire ou secondaire de la série aliphatique, hétérocyclique ou aromatique, procédé caractérisé en ce qu'on effectue la réaction en présence d'un pyridine-sulfonamide ou d'un pyridine-carboxamide ou d'un mélange de tels composés.

2. Procédé selon la revendication 1 caractérisé en ce que le pyridine-carboxamide est un pyridine-monocarboxamide.

3. Procédé selon la revendication 1 caractérisé en ce que le pyridine-carboxamide est le nicotinamide.

4. Procédé selon l'une quelconque des revendications 1, 2 et 3, caractérisé en ce qu'on effectue la réaction à une température comprise entre 15 et 30°C.

5. Procédé selon au moins une des revendications 1 à 4, caractérisé en ce qu'on transforme des radicaux chlorosulfonyles en radicaux sulfo en même temps qu'on effectue les réactions de condensation ou ultérieurement.

6. Procédé selon au moins une des revendications 1 à 5, selon lequel, dans les composés de départ et les composés finals, le radical éthylsulfonyle substitué en β est un radical hydroxy-2 éthylsulfonyle, chloro-2 éthylsulfonyle, acétoxy-2 éthylsulfonyle, sulfato-2 éthylsulfonyle, thiosulfato-2 éthylsulfonyle ou phosphato-2 éthylsulfonyle.

7. Procédé selon au moins une des revendications 1 à 5, caractérisé en ce que le colorant phtalocyanique préparé est un composé répondant à la formule générale (1):

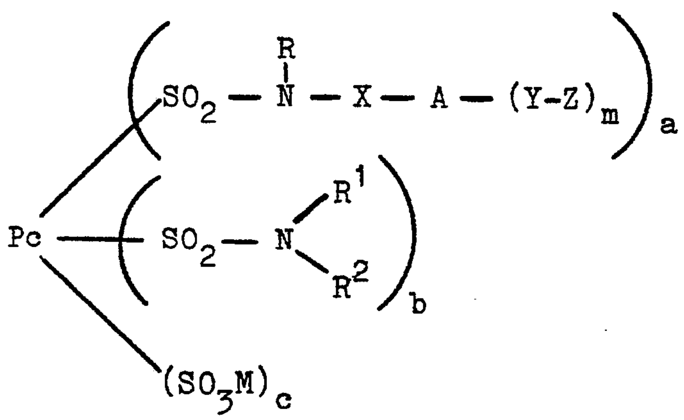

(1)

dans laquelle:
Pc représente le radical d'une phtalocyanine métallisée ou non qui peut porter des substituants supplémentaires aux positions 3 et/ou aux positions 4 des noyaux aromatiques carbocycliques et dans laquelle les radicaux chlorosulfonyles, sulfamoyles et/ou sulfo se trouvent aux positions 3 et/ou 4 des noyaux aromatiques carbocycliques,
R représente un atome d'hydrogène ou un radical aliphatique en $C_1$–$C_4$, éventuellement substitué,
$R^1$ et $R^2$ représentent chacun un atome d'hydrogène, un radical alkyle en $C_1$–$C_4$ éventuellement substitué, ou un radical aryle éventuellement substitué, ou
$R^1$ et $R^2$ forment ensemble, avec l'atome d'azote et un radical alkylène en $C_3$–$C_8$ ou avec un hétéroatome supplémentaire et deux radicaux alkylènes inférieurs, le radical d'un hétérocycle renfermant de 4 à 8 maillons,
A représente un radical aromatique-carbocyclique ou aromatique-hétérocyclique,
X représente une liaison directe ou un radical de liaison organique bivalent, ou forme, avec le radical –N(R)–, un radical répondant à la formule générale:

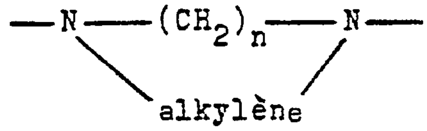

dans laquelle n désigne un nombre entier de 2 à 6 et "alkylène" représente un radical alkylène inférieur, Y représente une liaison directe ou un radical répondant à l'une des formules:

$-CH_2-$ , $-CH_2-CH_2-$ , 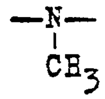 et 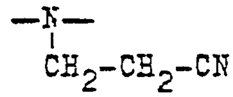

Z représente un radical hydroxy-2 éthylsulfonyle, chloro-2 éthylsulfonyle, acétoxy-2 éthylsulfonyle, thiosulfato-2 éthylsulfonyle, phosphato-2 éthylsulfonyle, vinylsulfonyle ou sulfato-2 éthylsulfonyle,

a représente un nombre entier de 1 à 4,

b représente un nombre entier de 0 à 3,

c représente un nombre entier de 0 à 3,

les nombres a, b et c pouvant être égaux les uns aux autres ou différents les uns des autres mais la somme (a + b + c) étant au plus égale à 4,

m représente le nombre 1 ou le nombre 2 et

M représente un atome d'hydrogène ou un métal alcalin,

et en ce qu'on fait réagir un phtalocyanine-sulfochlorure répondant à la formule générale (2):

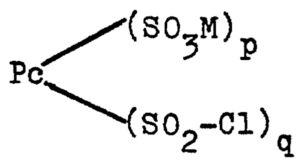 (2)

dans laquelle Pc et M ont les significations indiquées ci-dessus, p représente un nombre entier de 0 à 3 et q représente un nombre entier de 1 à 4, les nombres p et q pouvant être égaux l'un à l'autre ou différents l'un de l'autre mais la somme (p + q) étant au plus égale à 4, ou un mélange de tels phtalocyanine-sulfochlorures, en milieu aqueux, avec une amine répondant à la formule générale (3):

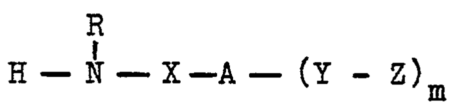 (3)

dans laquelle A, R, X, Y, Z et m ont les significations qui leur ont été données ci-dessus, et éventuellement avec une amine répondant à la formule générale (4):

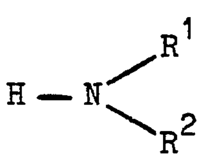 (4),

dans laquelle $R^1$ et $R^2$ ont les significations qui leur ont été données plus haut.

## Claims

1. A process for the preparation of water-soluble phthalocyanine dyestuffs which contain one or more β-substituted ethylsulfonyl groups or one or more vinylsulfonyl groups, by reaction of a phthalocyaninesulfonyl chloride, which may contain sulfo groups, or a mixture thereof with a primary or secondary amine which contains one or more β-substituted ethylsulfonyl groups or one or more vinylsulfonyl groups and, if desired, with a second primary or secondary amine of the aliphatic, heterocyclic or aromatic series, wherein the reaction is carried out in the presence of a pyridinesulfonamide or a pyridinecarboxamide or a mixture of such compounds.

2. The process as claimed in claim 1, wherein the pyridinecarboxamide is a pyridinemonocarboxamide.

3. The process as claimed in claim 1, wherein the pyridinecarboxamide is a nicotinamide.

4. The process as claimed in claim 1, 2 or 3, wherein the reaction is carried out at a temperature between 15 and 30°C.

5. The process as claimed in at least one of claims 1 to 4, wherein sulfochloride groups are converted into sulfo groups simultaneously with the condensation reactions or subsequently.

6. The process as claimed in at least one of claims 1 to 5, wherein the β-substituted ethylsulfonyl group in the starting and final compounds is a β-hydroxyethyl-sulfonyl, β-chloroethylsulfonyl, β-acetoxyethylsulfonyl, β-sulfatoethylsulfonyl, β-thiosulfatoethyl-sulfonyl or β-phosphatoethylsulfonyl group.

7. The process as claimed in at least one of claims 1 to 5, wherein the phthalocyanine dyestuff prepared is a compound of the formula (1)

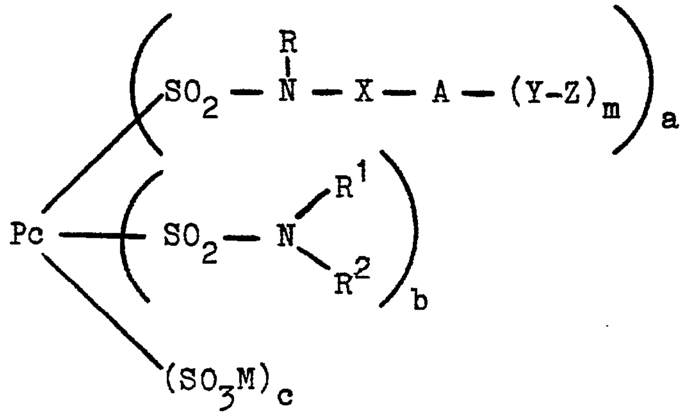

(1)

in which

Pc is the radical of the metal-free or a metal-containing phthalocyanine, which may be further substituted in the 3- and/or 4-positions of the carbocylic aromatic rings, and in which the sulfochloride, sulfonamide and/or sulfo groups are bonded in the 3- and/or 4-positions of the carbocyclic aromatic rings,

R is a hydrogen atom or a $C_1$–$C_4$ aliphatic radical, which may be substituted,

$R^1$ and $R^2$ each denote a hydrogen atom or a $C_1$–$C_4$ alkyl group, which may be substituted, or an aryl radical, which may be substituted, or

$R^1$ and $R^2$, together with the nitrogen atom and an alkylene radical having 3 to 8 carbon atoms or with a further hetero atom and two lower alkylene radicals, form the radical of a 4- to 8-membered heterocyclic ring,

A is an aromatic carbocyclic or aromatic heterocyclic radical,

X is a direct bond or a divalent organic linking member, or together with the –N(R)– group, forms a radical of the general formula

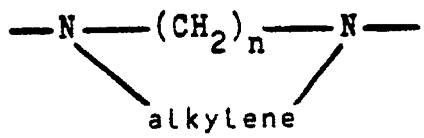

in which n is an integer from 2 to 6 and alkylene represents a lower alkylene radical,

Y represents a direct bond or a group of the formula

$-CH_2-$ , $-CH_2-CH_2-$ , 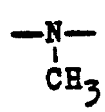 or 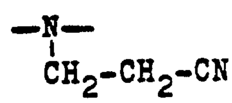

Z is the β-hydroxyethylsulfonyl, β-chloreoethylsulfonyl, β-acetoxyethylsulfonyl, β-thiosulfatoethylsulfonyl, β-phosphatoethylsulfonyl, vinylsulfonyl or β-sulfatoethylsulfonyl group,

a is an integer from 1 to 4,

b is an integer from 0 to 3, and

c is an integer from 0 to 3,

where a, b and c are identical to or different from one another, but the sum of (a + b + c) is a maximum of 4,

m is the number 1 or 2, and

M denotes a hydrogen atom or an alkali metal,

and wherein the reaction is carried out using a phthalocyaninesulfonyl chloride of the general formula (2)

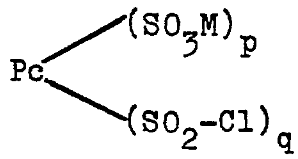

(2)

in which p is an integer from 0 to 3, and
q is an integer from 1 to 4,
where p and q can be identical to or different from one another, but the sum of (p + q) is a maximum of 4, and in which Pc, and M have the abovementioned meanings, or a mixture thereof, in aqueous medium with an amine of the formula (3)

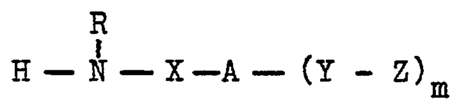

(3)

in which A, R, X, Y, Z and m have the abovementioned meanings, and, if desired, with an amine of the formula (4)

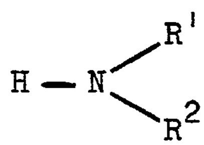

(4),

in which $R^1$ and $R^2$ have the abovementioned meanings.